# EUROPEAN PATENT SPECIFICATION

(11) **EP 3 106 842 B1**
(45) Date of publication and mention of the grant of the patent: **13.05.2020**
(21) Application number: 15749036.8
(22) Date of filing: 05.02.2015
(51) Int. Cl.: G01F 1/00, G01F 15/06, G08C 15/00, G08C 17/02, H01Q 1/24, H01Q 21/28, H01Q 21/30, H01Q 1/22, H01Q 7/00, H01Q 9/04

(54) **FLOW RATE MEASUREMENT DEVICE AND WIRELESS COMMUNICATION DEVICE**
VORRICHTUNG ZUR DURCHFLUSSGESCHWINDIGKEITSMESSUNG UND DRAHTLOSKOMMUNIKATIONSVORRICHTUNG
DISPOSITIF DE MESURE DE DÉBIT ET DISPOSITIF DE COMMUNICATION SANS FIL

(30) Priority: 14.02.2014 JP 2014026147
(43) Date of publication of application: 21.12.2016
(73) Proprietor: Panasonic Intellectual Property Management Co., Ltd., Osaka-shi, Osaka 570-6207 (JP)
(72) Inventor: MATSUMOTO, Takayuki, Osaka 540-6207 (JP); TERAMOTO, Shota, Osaka 540-6207 (JP); OMOTO, Yukihiro, Osaka 540-6207 (JP)
(74) Representative: SSM Sandmair
(86) International application number: PCT/JP2015/000512
(87) International publication number: WO 2015/122157

(56) References cited:
- WO-A1-2005/091433
- WO-A1-2013/145720
- WO-A1-2014/013731
- JP-B2- 4 184 956
- US-A1- 2003 098 812
- US-A1- 2008 123 383

## Description

### TECHNICAL FIELD

The present invention relates to a flow rate measurement device that measures the flow rate of a measurement target, and a wireless communication device connected to the flow rate measurement device.

### BACKGROUND ART

In an automatic meter reading system that has been introduced in recent years, a flow rate measurement device installed in a building such as a house measures the amount of usage of gas, electricity, water or the like, and the measured data is collected over wireless communication. With such an automatic meter reading system, there is a need for a reduction in size of the flow rate measurement device in view of ease of installation and the like.

There is proposed a flow rate measurement device (e.g., a gas meter) including a wireless communication device (e.g., see PTL 1).

The wireless communication device disclosed in PTL 1 includes a board-mounted planar antenna. The wireless communication device transmits, using the planar antenna, values measured by a flow rate measurement device to a wireless master unit which is distanced by several meters to several tens of meters.

Another type of the automatic meter reading system uses RFID (Radio Frequency Identification). When a wireless communication device connected to a flow rate measurement device and a handheld terminal are in close proximity to each other, induced electromotive force occurs at the wireless communication device. The induced electromotive force allows the handheld terminal to read and write measured values and management information to and from the flow rate measurement device (e.g., see PTL 2).

As described above, as the automatic meter reading system, there have been known the communication mode in which measured values and management information are transmitted to a wireless master unit which is distanced by several meters to several tens of meters, and the communication mode in which measured values and management information are transmitted to a handheld terminal within a short distance using induced electromotive force. However, there is no known technical solution for realizing a system adapting both the communication modes.

PTL 3 discloses a broad band multi-resonant antenna utilizing capacitive coupling between multiple conductive plates for compact antenna applications. The antenna comprises a main patch which is electrically connected to a ground plane via a ground pin which is perpendicular to the ground plane. A feeding patch is arranged between the main patch and the ground plane and electrically connected to a transceiver by a feeding pin which is perpendicular to the feeding patch. The feeding pin extends through a hole included in the ground plane.

PTL 4 discloses a semiconductor device having an antenna and an integrated circuit. An embodiment of the semiconductor device may include two antennas, that is, an antenna for receiving power and an antenna for receiving a signal. For example, in the case of transmitting power, a radio wave with a frequency of 13.56 MHz and a magnetic field are used, and in the case of transmitting a signal, a radio wave with a frequency of 950 MHz and an electric field are used. By thus separately using antennas depending on functions, power can be supplied for communication only in a short distance and a signal can be transmitted even in a long distance.

PTL 5 discloses a wireless device for a flow rate measurement device. A first radiating conductor and a second radiating conductor each are electrically connected to a circuit board by a feeding terminal which is perpendicular to the circuit board. The first and second radiating conductors are arranged with the same distance with respect to the circuit board.

### Citation List

### Patent Literatures

PTL 1: Unexamined Japanese Patent Publication No. H10-313212
PTL 2: Unexamined Japanese Patent Publication No. 2003-323686
PTL 3: US 2003/0098812 A1
PTL 4: US 2008/0123383 A1
PTL 5: WO 2014/013731 A1

### SUMMARY OF THE INVENTION

The present invention has been made to solve the problem described above, and provides a wireless communication device as defined in claim 1 that can support both long-distance wireless communication and near-distance wireless communication.

A flow rate detecting device of the present invention includes: a wireless communication device according to the invention, a metal housing that is made of an electrically conductive material and houses a sensor that detects a flow rate of a measurement target; wherein a resin case of the wireless device according to the invention is disposed on the metal housing.

Further, the wireless communication device of the present invention includes: a long-distance radio radiating conductor that radiates high frequency signal waves for establishing long-distance communication; a short-distance radio radiating conductor that radiates high frequency signal waves for establishing short-distance communication; a radio frequency (RF) circuit board that electrically connects to the long-distance radio radiating conductor and the short-distance radio radiating conductor; a resin case that houses the long-distance radio radiating conductor, the short-distance radio radiating conductor, and the RF circuit board; a long-distance radio supporter that supports the long-distance radio radiating conductor and extends perpendicularly to the RF circuit board; and a short-distance radio supporter that supports the short-distance radio radiating conductor and extends perpendicularly to the RF circuit board. The long-distance radio radiating conductor is structured using a folded dipole antenna and substantially in parallel to the RF circuit board, and the short-distance radio radiating conductor is structured using a self-supported linear antenna and substantially in parallel to the RF circuit board. A distance between the long-distance radio radiating conductor supported by the long-distance radio supporter and the RF circuit board is shorter than a distance between the short-distance radio radiating conductor supported by the short-distance radio supporter and the RF circuit board.

This structure can implement a wireless communication device and a flow rate measurement device that do not impair the communication performance of the near-distance and long-distance wireless communication.

### BRIEF DESCRIPTION OF DRAWINGS

FIG. 1 is a front view showing the structure of a flow rate measurement device according to an exemplary embodiment of the present invention.
FIG. 2 is a side view showing the structure of the flow rate measurement device according to the exemplary embodiment of the present invention.

### DESCRIPTION OF EMBODIMENT

In the following, with reference to the drawings, a specific description will be given of an exemplary embodiment of the present invention.

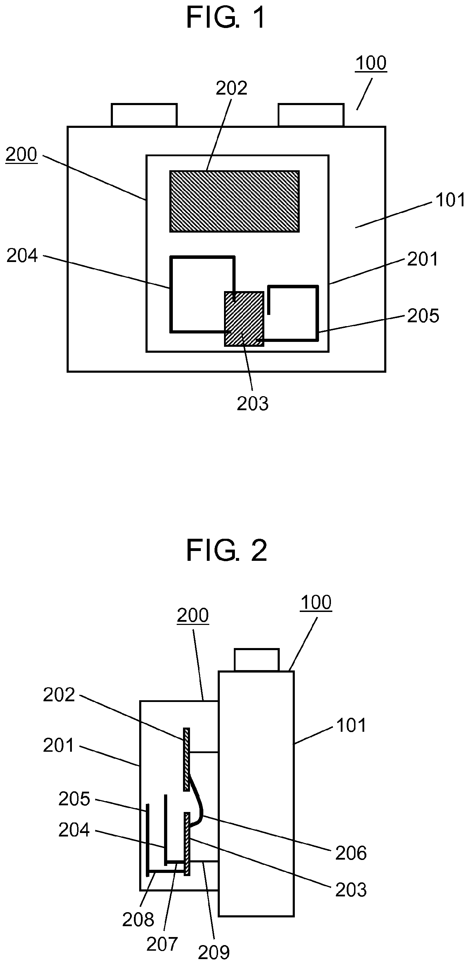

FIG. 1 is a front view showing the structure of flow rate measurement device 100 according to the exemplary embodiment. Further, FIG. 2 is a side view showing the structure of flow rate measurement device 100.

Flow rate measurement device 100 measures a measurement target which is one of, for example, gas, tap water, electricity and the like. Flow rate measurement device 100 is provided with wireless communication device 200 on its front side.

Metal housing 101 is formed to have a substantially rectangular parallelepiped-shape (including a rectangular parallelepiped-shape), and is made of an electrically conductive material. The electrically conductive material may be, for example, metal selected from aluminum, stainless steel and the like, or electrically conductive resin.

Wireless communication device 200 is formed by resin case 201. Resin case 201 houses meter controller board 202, radio frequency (RF) circuit board 203, long-distance radio radiating conductor 204, short-distance radio radiating conductor 205, inter-board connection cable 206, long-distance radio supporter 207, short-distance radio supporter 208, and RF circuit board connection cable 209.

Resin case 201 is disposed on the front wall of metal housing 101, and is made of a non-electrically conductive material. The non-electrically conductive material may be, for example, resin having an electrically insulating characteristic, which is selected from polypropylene, acrylonitrile-butadiene-styrene (ABS) and the like. Resin case 201 is formed into a rectangular parallelepiped-shape in which a front-rear thickness dimension is smaller than a top-bottom dimension and a right-left dimension.

Meter controller board 202 includes an integrated circuit in which a program is installed. The integrated circuit includes a signal generating circuit that generates signals to be transmitted, based on any detected signals. By the integrated circuit operating based on the program, the flow rate of a measurement target selected from gas, tap water and the like is acquired based on the detected value. Here, the present invention does not particularly limit a method for obtaining a measured value. For example, when the measurement target is gas, any known method selected from the diaphragm scheme, the ultrasonic scheme and the like may be employed. It is just required that a program necessary for calculating the measurement value based on the employed measurement method is installed in the integrated circuit.

RF circuit board 203 has a structure in which a long-distance radio transmission circuit, a long-distance radio reception circuit, a short-distance radio transmission circuit, a short-distance radio reception circuit, long-distance radio radiating conductor 204, short-distance radio radiating conductor 205, a matching circuit, and the integrated circuit are mounted on a board. The long-distance radio transmission circuit transmits data to a wireless master unit over wireless communication. The long-distance radio reception circuit processes data received from the master unit over wireless communication. The short-distance radio transmission circuit transmits data to a handheld terminal over near-distance wireless communication. The short-distance radio reception circuit processes data received from the handheld terminal by near-distance wireless communication.

The matching circuit matches the long-distance radio transmission circuit, the long-distance radio reception circuit, the short-distance radio transmission circuit, and the short-distance radio reception circuit with one another. The integrated circuit is electrically connected to long-distance radio radiating conductor 204 and short-distance radio radiating conductor 205, and includes a power supply circuit that supplies high frequency signals to long-distance radio radiating conductor 204 and short-distance radio radiating conductor 205.

RF circuit board 203 and meter controller board 202 are electrically connected to each other by inter-board connection cable 206. Further, RF circuit board 203 is electrically connected to long-distance radio radiating conductor 204 via long-distance radio supporter 207 that extends perpendicularly to the plane of the board. Further, RF circuit board 203 is electrically connected to short-distance radio radiating conductor 205 via short-distance radio supporter 208 that extends perpendicularly to the plane of the board. The integrated circuit on meter controller board 202 applies potential to long-distance radio radiating conductor 204 and short-distance radio radiating conductor 205 in accordance with the measured data, thereby causing high frequency signals representing the measured data to be generated.

Long-distance radio radiating conductor 204 radiates high frequency signals modulated by the long-distance radio transmission circuit as radio waves, and receives radio waves (high frequency signals) from an external source and passes the radio waves to the long-distance radio reception circuit that demodulates the radio waves. Short-distance radio radiating conductor 205 radiates high frequency signals modulated by the short-distance radio transmission circuit as radio waves, and receives radio waves (high frequency signals) from an external source, and passes the radio waves to the short-distance radio reception circuit that demodulates the radio waves.

Long-distance radio radiating conductor 204 is connected to RF circuit board 203 via long-distance radio supporter 207, and short-distance radio radiating conductor 205 is connected to RF circuit board 203 via short-distance radio supporter 208. Since long-distance radio supporter 207 is structured to be shorter than short-distance radio supporter 208, short-distance radio radiating conductor 205 is positioned on the front side (the position being distanced from RF circuit board 203, and near to the front surface of resin case 201) relative to long-distance radio radiating conductor 204. This structure allows long-distance radio radiating conductor 204 to be distanced from RF circuit board 203, and to keep an appropriate distance also from resin case 201 and metal housing 101. This suppresses any influence of metal objects in resin case 201 and metal housing 101 on communication. On the other hand, since short-distance radio radiating conductor 205 is positioned near the front surface of resin case 201, short-distance radio radiating conductor 205 can establish excellent communication with the handheld terminal within a several centimeter range.

Long-distance radio radiating conductor 204 has the structure of a folded dipole antenna. Short-distance radio radiating conductor 205 has the structure of a loop antenna.

RF circuit board 203 is electrically connected to metal housing 101 corresponding to ground, via RF circuit board connection cable 209. According to the present exemplary embodiment, of portions of RF circuit board 203, the portion where metal housing 101 and RF circuit board 203 are electrically connected to each other by RF circuit board connection cable 209 and the portion where long-distance radio supporter 207 is connected can be positioned with a minimum distance from each other. This enables full use of metal housing 101 as the antenna ground, and the effect of improving the antenna characteristic can be fully exhibited.

Here, problems in realizing near-distance communication and long-distance communication are discussed. In order to realize both the communication modes, it is necessary to mount two wireless communication circuits on wireless communication device 200 mounted on flow rate measurement device 100, namely, a long-distance wireless communication circuit that transmits data such as measured values to a wireless master unit, and a near-distance wireless communication circuit that communicates necessary information with a handheld terminal.

However, there are several problems to be taken into consideration in adapting wireless communication device 200 to the long-distance wireless communication and to the near-distance wireless communication.

One problem is that, while the space for mounting the long-distance wireless communication circuit and the near-distance wireless communication circuit is limited, the board on which the near-distance wireless communication circuit is mounted tends to occupy the space by a greater proportion.

In the near-distance wireless communication, an antenna should be loop-shaped and the loop area must be greater as much as possible, so that greater induced electromotive force occurs. Further, this antenna needs to be equipped with a high frequency matching circuit required for matching and a connector for connecting to the main board via a wired signal line. Hence, the board on which the near-distance wireless communication circuit is mounted increases in size by the area of the matching circuit and the area required for mounting the connector. Accordingly, a reduction in the installation area of the long-distance radio antenna is inevitable.

Another problem is that, while the space for mounting the long-distance wireless communication circuit and the near-distance wireless communication circuit is limited, the board on which the long-distance wireless communication circuit is mounted and the board on which the near-distance wireless communication circuit is mounted cannot be easily integrated into one board.

As to a long-distance wireless communication antenna that communicates over a distance of several meters to several tens of meters enabled by frequency bands including a 169 MHz band, a 400 MHz band, and a 800 MHz band, the communication performance becomes poor when the board on which the long-distance wireless communication circuit is mounted, or metal-made flow rate measurement device 100 exists nearby. Accordingly, the antenna needs to be disposed with a maximum possible distance from flow rate measurement device 100 and the board on which long-distance wireless communication circuit is mounted (RF circuit board 203). In PTL 1, the board on which the long-distance wireless communication circuit is mounted is provided at a position near the flow rate measurement device. The long-distance wireless communication antenna stands perpendicularly to the board, and is folded toward the inner side of the case of the wireless communication device where the board is housed.

On the other hand, a near-distance communication antenna that is realized by NFC (Near Field Communication) and communicates within a several centimeter range is normally formed on the surface of the board.

Here, when it is intended to integrate the board on which the long-distance wireless communication circuit is mounted and the board on which the near-distance wireless communication circuit into one board, the near-distance communication antenna is formed on the surface of the board on which the long-distance wireless communication circuit is mounted and which is positioned near flow rate measurement device 100. However, in this structure, the near-distance communication antenna is covered at the deep portion of the case of wireless communication device 200, and therefore the near-distance communication antenna and the handheld terminal cannot be brought in close proximity to each other by a distance of several centimeters.

Further, when the intended use of flow rate measurement device 100 is one of a gas meter, a water meter, and an electricity meter, an increase in the size of the case of wireless communication device 200 is limited. In this case, a λ/4 monopole antenna (λ = 1 wavelength) capable of being reduced in size may be used.

At a frequency of 169 MHz, λ/4 of long-distance radio radiating conductor 204 is about 45 cm. On the other hand, resin case 201 measures about 10 cm × 20 cm. When long-distance radio radiating conductor 204 is to be implemented with a dimension of λ/4 in the case, the antenna needs to be stretched fully in the case.

In contrast, short-distance radio radiating conductor 205 establishes wireless communication within a several centimeter range using a frequency of 13.65 MHz based on, for example, NFC (Near Field Communication) standards. The short-distance radio circuit is usually in a non-conducting state, and the antenna needs to excite current to thereby generate induced electromotive force. Accordingly, the antenna needs to be great in size to some extent. Normally, the antenna should measure about 7 cm × 4 cm. Short-distance radio radiating conductor 205 is normally formed on the board. Here, as described above, there arises the problem of an increase in the area of the board because of the necessity for mounting at least the antenna matching circuit and the inter-board connector on the board.

In order to solve the problem, in the present exemplary embodiment, short-distance radio radiating conductor 205 is implemented by a self-supported linear antenna. Thus, a board signal-dedicated connector that conventionally needs to be provided on the board can be dispensed with. Furthermore, mounting the antenna matching circuit on the main board also reduces the area by the area of the matching circuit.

Further, long-distance radio radiating conductor 204 and short-distance radio radiating conductor 205 are disposed by respective supporters at different heights with reference to RF circuit board 203. This allows the antenna elements of long-distance radio radiating conductor 204 and short-distance radio radiating conductor 205 each forming a loop shape to be disposed with a maximum loop area. Further, as compared to the case where the antenna is formed on the board, the antenna can be implemented at extremely low costs.

Note that, in the present exemplary embodiment, linear antenna radiating conductors are employed as long-distance radio radiating conductor 204 and short-distance radio radiating conductor 205. However, the present invention is not limited thereto, and each radiating conductor may be other plate-like conductor elements. Exemplary linear conductor elements include a loop antenna, a meander line antenna and the like.

Long-distance radio radiating conductor 204 and long-distance radio supporter 207 may be structured independently of each other or may be integrated with each other. When long-distance radio radiating conductor 204 and long-distance radio supporter 207 are structured independently of each other, they may be made of an identical material or different materials. Similarly, short-distance radio radiating conductor 205 and short-distance radio supporter 208 may be structured independently of each other or may be integrated with each other. When short-distance radio radiating conductor 205 and short-distance radio supporter 208 are structured independently of each other, they may be made of an identical material or different materials.

In the present exemplary embodiment, linear conductor elements are employed as long-distance radio radiating conductor 204 and short-distance radio radiating conductor 205. However, as described above, the radiating conductors may be structured with other conductor elements. For example, a planar conductor element selected from a planar inverted-F antenna, a linear inverted-L antenna, a planar dipole antenna and the like may be employed as each of the radiating conductors.

Note that, the foregoing description is to be considered just illustrative, and provided for the purpose of showing the best mode of embodying the present invention to those skilled in the art. Details of at least one of the structure and function of the exemplary embodiment can be substantially changed without departing from the scope of the present invention as defined by the appended claims.

Further, while it has been described that wireless communication device 200 is integrally mounted on flow rate measurement device 100, the present invention is not limited thereto. For example, wireless communication device 200 may be structured independently of the flow rate measurement device including the metal housing made of an electrically conductive material, and may be mounted on the flow rate measurement device.

As has been described above, flow rate measurement device 100 according to the present exemplary embodiment includes: metal housing 101 that is made of an electrically conductive material and houses a sensor that detects a flow rate of a measurement target; long-distance radio radiating conductor 204 that radiates high frequency signal waves for establishing long-distance communication; short-distance radio radiating conductor 205 that radiates high frequency signal waves for establishing short-distance communication; RF circuit board 203 that electrically connects to long-distance radio radiating conductor 204 and short-distance radio radiating conductor 205; resin case 201 that is disposed on metal housing 101 and houses long-distance radio radiating conductor 204, short-distance radio radiating conductor 205, and RF circuit board 203; long-distance radio supporter 207 that supports long-distance radio radiating conductor 204 and extends perpendicularly to RF circuit board 203; and short-distance radio supporter 208 that supports short-distance radio radiating conductor 205 and extends perpendicularly to RF circuit board 203.

This structure makes it possible to secure both the near-distance wireless communication enabled distance and the communication distance of the long-distance radio antenna at low costs.

Long-distance radio radiating conductor 204 is structured using a folded dipole antenna and substantially in parallel to RF circuit board 203. Short-distance radio radiating conductor 205 is structured using a self-supported linear antenna and substantially in parallel to RF circuit board 203.

In this structure, since long-distance radio radiating conductor 204 is implemented by a folded dipole antenna, the high antenna gain characteristic is obtained, and the antenna can be implemented by a linear metal. This reduces costs in terms of material and manufacture, and also eliminates the necessity for separately providing a connector or a connection cable for connecting the antenna and the board to each other. Further, since short-distance radio radiating conductor 205 is implemented by a linear self-supported antenna, the distance between the handheld terminal and short-distance radio radiating conductor 205 can be shortened, and the antenna can be implemented by a linear metal. This reduces costs in terms of material and manufacture, and the antenna is self-supported. This also eliminates the necessity for separately providing a connector or a connection cable for connecting the antenna and the board to each other. Overall, high antenna performance can be obtained cost effectively.

The distance between long-distance radio radiating conductor 204 supported by long-distance radio supporter 207 and RF circuit board 203 is shorter than the distance between short-distance radio radiating conductor 205 supported by short-distance radio supporter 208 and RF circuit board 203.

In this structure, long-distance radio radiating conductor 204 is disposed to be distanced from the front surface of resin case 201 to some extent. In some cases, flow rate measurement device 100 such as a gas meter is installed in a housing box whose front door is made of metal so as not to mar the appearance of the house. In this case, when the metal-made front door of the housing box is closed, the distance between the front door and long-distance radio radiating conductor 204 is shortened, reducing the communication performance of the long-distance wireless communication. With the structure described above, even if flow rate measurement device 100 is installed in a housing box whose front door is made of metal, a reduction in the communication performance of the long-distance wireless communication can be prevented.

Long-distance radio radiating conductor 204 and short-distance radio radiating conductor 205 need to be distanced from each other in order to prevent metal of the radiating conductors from influencing each other. On the other hand, the upper limit of the size of wireless communication device 200 limits the mounting space in which the distance is secured. Accordingly, long-distance radio radiating conductor 204 and short-distance radio radiating conductor 205 are installed three-dimensionally at different heights. Thus, as compared to the case where long-distance radio radiating conductor 204 and short-distance radio radiating conductor 205 are installed at the same height, a certain distance can be secured between the radiating conductors, and their respective loop areas formed by the loop shapes in a front view can be maximized.

The frequencies of the high frequency signal waves for establishing the long-distance communication may be in a 169 MHz band, and the frequencies of the high frequency signal waves for establishing the short-distance communication may be in a 13.65 MHz band.

In this structure, in order to obtain the best antenna characteristic at 169 MHz, the antenna needs to be a quarter-wavelength long, that is, the length thereof needs to be about 45 cm. An antenna set to have a length of quarter-wavelength long as much as possible using the technique of the present exemplary embodiment can exhibit the best antenna characteristic. In the European countries, the transmission output up to 500 mW as the antenna output can be attained using the 169 MHz band. Thus, the long-distance radio propagation distance can be maximized.

This structure also allows the short-distance communication antenna to be disposed as close as possible to the inner surface of the case of the wireless communication device. Accordingly, communication within a distance of several centimeters at the 13.6 MHz band can be realized.

Further, wireless communication device 200 according to the present exemplary embodiment includes: long-distance radio radiating conductor 204 that radiates high frequency signal waves for establishing long-distance communication; short-distance radio radiating conductor 205 that radiates high frequency signal waves for establishing short-distance communication; RF circuit board 203 that electrically connects to long-distance radio radiating conductor 204 and short-distance radio radiating conductor 205; resin case 201 that houses long-distance radio radiating conductor 204, short-distance radio radiating conductor 205, and RF circuit board 203; long-distance radio supporter 207 that supports long-distance radio radiating conductor 204 and extends perpendicularly to RF circuit board 203; and short-distance radio supporter 208 that supports short-distance radio radiating conductor 205 and extends perpendicularly to RF circuit board 203.

This structure makes it possible to secure both the near-distance wireless communication enabled distance and the communication distance of the long-distance radio antenna at low costs.

### INDUSTRIAL APPLICABILITY

As has been described above, the present invention exhibits the advantageous effect of supporting the near-distance wireless communication and the long-distance wireless communication despite a limited mounting space. Hence, the present invention is useful as a flow rate measurement device that measures the flow rate of a measurement target, a wireless communication device connected to the flow rate measurement device and the like.

### REFERENCE MARKS IN THE DRAWINGS

- 100: flow rate measurement device
- 101: metal housing
- 200: wireless communication device
- 201: resin case
- 202: meter controller board
- 203: RF circuit board
- 204: long-distance radio radiating conductor
- 205: short-distance radio radiating conductor
- 206: inter-board connection cable
- 207: long-distance radio supporter
- 208: short-distance radio supporter
- 209: RF circuit board connection cable

## Claims

1. A wireless communication device (200) comprising:
a long-distance radio radiating conductor (204) that radiates high frequency signal waves for establishing long-distance communication;
a short-distance radio radiating conductor (205) that radiates high frequency signal waves for establishing short-distance communication;
a radio frequency (RF) circuit board (203) that electrically connects to the long-distance radio radiating conductor (204) and the short-distance radio radiating conductor (205);
a resin case (201) that houses the long-distance radio radiating conductor (204), the short-distance radio radiating conductor (205), and the RF circuit board (203);
a long-distance radio supporter (207) that supports the long-distance radio radiating conductor (204) and extends perpendicularly to the RF circuit board (203); and
a short-distance radio supporter (208) that supports the short-distance radio radiating conductor (205) and extends perpendicularly to the RF circuit board (203),
**characterized in that**
the long-distance radio radiating conductor (204) is structured using a folded dipole antenna and substantially in parallel to the RF circuit board (203), and
the short-distance radio radiating conductor (205) is structured using a self-supported linear antenna and substantially in parallel to the RF circuit board (203),
a distance between the long-distance radio radiating conductor (204) supported by the long-distance radio supporter (207) and the RF circuit board (203) is shorter than a distance between the short-distance radio radiating conductor (205) supported by the short-distance radio supporter (208) and the RF circuit board (203).

2. The wireless communication device (100) according to claim 1, wherein
frequencies of the high frequency signal waves for establishing the long-distance communication are in a 169 MHz band, and
frequencies of the high frequency signal waves for establishing the short-distance communication are in a 13.65 MHz band.

3. A flow rate measurement device (100) comprising:
the wireless communication device (200) according to claim 1 or 2;
a metal housing (101) that is made of an electrically conductive material and houses a sensor that detects a flow rate of a measurement target;
wherein the resin case (201) is disposed on the metal housing (101).

## Patentansprüche

1. Drahtloskommunikationsvorrichtung (200), umfassend:
einen Langstreckenfunk-Abstrahlleiter (204), der hochfrequente Signalwellen zum Aufbauen von Langstreckenkommunikation abstrahlt;
einen Kurzstreckenfunk-Abstrahlleiter (205), der hochfrequente Signalwellen zum Aufbauen von Kurzstreckenkommunikation abstrahlt;
eine Hochfrequenz-(HF)-Leiterplatte (203), die sich mit dem Langstreckenfunk-Abstrahlleiter (204) und dem Kurzstreckenfunk-Abstrahlleiter (205) elektrisch verbindet;
ein Harzgehäuse (201), das den Langstreckenfunk-Abstrahlleiter (204), den Kurzstreckenfunk-Abstrahlleiter (205) und die HF-Leiterplatte (203) beherbergt;
einen Langstreckenfunkträger (207), der den Langstreckenfunk-Abstrahlleiter (204) trägt und sich senkrecht zur HF-Leiterplatte (203) erstreckt; und
einen Kurzstreckenfunkträger (208), der den Kurzstreckenfunk-Abstrahlleiter (205) trägt und sich senkrecht zur HF-Leiterplatte (203) erstreckt,
**dadurch gekennzeichnet, dass**
der Langstreckenfunk-Abstrahlleiter (204) unter Verwendung einer gefalteten Dipolantenne und im Wesentlichen parallel zur HF-Leiterplatte (203) strukturiert ist und
der Kurzstreckenfunk-Abstrahlleiter (205) unter Verwendung einer selbsttragenden linearen Antenne und im Wesentlichen parallel zur HF-Leiterplatte (203) strukturiert ist,
ein Abstand zwischen dem Langstreckenfunk-Abstrahlleiter (204), der durch den Langstreckenfunkträger (207) getragen wird, und der HF-Leiterplatte (203) kleiner als ein Abstand zwischen dem Kurzstreckenfunk-Abstrahlleiter (205), der durch den Kurzstreckenfunkträger (208) getragen wird, und der HF-Leiterplatte (203) ist.

2. Drahtloskommunikationsvorrichtung (100) nach Anspruch 1, wobei
Frequenzen der hochfrequenten Signalwellen zum Aufbauen der Langstreckenkommunikation in einem 169-MHz-Band liegen und
Frequenzen der hochfrequenten Signalwellen zum Aufbauen der Kurzstreckenkommunikation in einem 13,65-MHz-Band liegen.

3. Durchflussmengenmessvorrichtung (100), umfassend:
die Drahtloskommunikationsvorrichtung (200) nach Anspruch 1 oder 2;
ein Metallgehäuse (101), das aus einem elektrisch leitfähigen Material besteht und einen Sensor beherbergt, der eine Durchflussmenge eines Messziels detektiert;
wobei das Harzgehäuse (201) an dem Metallgehäuse (101) angeordnet ist.

## Revendications

1. Dispositif de communication sans fil (200), comprenant :
un conducteur rayonnant radio à longue distance (204) qui rayonne des ondes de signal à haute fréquence pour établir une communication à longue distance ;
un conducteur rayonnant radio à courte distance (205) qui rayonne des ondes de signal à haute fréquence pour établir communication à courte distance ;
une carte de circuit imprimé à radiofréquence (RF) (203) qui se connecte électriquement au conducteur rayonnant radio à longue distance (204) et au conducteur rayonnant radio à courte distance (205) ;
un boîtier en résine (201) qui loge le conducteur rayonnant radio à longue distance (204), le conducteur rayonnant radio à courte distance (205), et la carte de circuit imprimé à RF (203) ;
un supporteur radio à longue distance (207) qui supporte le conducteur rayonnant radio à longue distance (204) et s'étend perpendiculairement à la carte de circuit imprimé à RF (203) ; et
un supporteur radio à courte distance (208) qui supporte le conducteur rayonnant radio à courte distance (205) et s'étend perpendiculairement à la carte de circuit imprimé à RF (203),
**caractérisé en ce que**
le conducteur rayonnant radio à longue distance (204) est structuré en utilisant une antenne dipôle pliée et sensiblement en parallèle à la carte de circuit imprimé à RF (203), et
le conducteur rayonnant radio à courte distance (205) est structuré en utilisant une antenne linéaire autosupportée et sensiblement en parallèle à la carte de circuit imprimé à RF (203),
une distance entre le conducteur rayonnant radio à longue distance (204) supporté par le supporteur radio à longue distance (207) et la carte de circuit imprimé à RF (203) est plus courte qu'une distance entre le conducteur rayonnant radio à courte distance (205) supporté par le supporteur radio à courte distance (208) et la carte de circuit imprimé à RF (203).

2. Dispositif de communication sans fil (100) selon la revendication 1, dans lequel
des fréquences des ondes de signal à haute fréquence pour établir la communication à longue distance sont dans une bande de 169 MHz, et
des fréquences des ondes de signal à haute fréquence pour établir la communication à courte distance sont dans une bande de 13,65 MHz.

3. Dispositive de mesure de débit (100), comprenant :
le dispositif de communication sans fil (200) selon la revendication 1 ou 2 ;
un logement métallique (101) qui est fait d'un matériau électriquement conducteur et loge un capteur qui détecte un débit d'une cible de mesure ;
dans lequel le boîtier en résine (201) est disposé sur le logement métallique (101).
